# EUROPEAN PATENT SPECIFICATION

(11) **EP 3 581 458 B1**
(45) Date of publication and mention of the grant of the patent: **04.05.2022**
(21) Application number: 18475503.1
(22) Date of filing: 10.07.2018
(51) Int. Cl.: B61D 45/00, B60P 3/077, B60T 3/00

(54) **MECHANISM FOR VERTICAL ADJUSTMENT OF WHEEL BLOCK**
MECHANISMUS ZUR HÖHENVERSTELLUNG EINES RADBLOCKS
MÉCANISME DE RÉGLAGE VERTICAL D'UN BLOC DE ROUE

(30) Priority: 14.06.2018 SK 500642018 U
(43) Date of publication of application: 18.12.2019
(73) Proprietor: Tatravagónka, a.s., 058 01 Poprad (SK)
(72) Inventor: Hlinka, Juraj, 058 01 Poprad (SK)
(74) Representative: Belicka, Ivan

(56) References cited:
- EP-A1- 1 038 725
- DE-A1-102007 004 519

## Description

### Field of technology

Technical solution relates to the mechanism for vertical adjustment of the wheel block mainly for railway wagons designed for transportation of cars.

### Background art

Currently, various solutions for securing of cars during transpiration on railway wagons are applied. The simplest solution is application of a wedge, which is attached to the wagon loading surface. But this method is laborious and also expensive, because large number of wedges is necessary. For example, in the document DE102007004519, there is described a solution of a wheel block, mainly for a railway car-carrying wagon, that has a retaining arm, which lies on the flat bearing arm and both arms are rotary by 360 degrees on one common joint. In another document EP 0497715, there is described a solution for device for blocking of transported vehicles on floors of transporting trailers or railway wagons. In the documents FR2419198, FR2376017, EP0284532, the wheel block position is secured by means of the brace strut. In the documents EP0497715, WO2010007245, fixation of the wheel block is solved by means of a stop firmly attached to the block arm, whereby the stop leans against the block guide in secured position. Other solutions use a central rail for securing of the wheel block; the central rail being located on the whole wagon length.

The EP 1038725 describes a tiltable chock for stopping wheels of motor vehicles loaded on road vehicles, where the chock is swingable about a transverse axis with respect to the motor vehicles loading and unloading direction, and is adapted to occupy a working position in which it prevents the motor vehicle wheels from moving during transports, and a rest position in which it does not pose any obstacle to the passage of motor vehicle wheels thereabove.

### Nature of technical solution

Shortcomings specified in the Background art are removed in the utility design described in this application, whereby nature of the submitted technical solution is the mechanism for vertical adjustment of the wheel block for railway wagons designed for transportation of cars. The specified mechanism contains a fixed part, where the central part of the fixed part has a cut-out and also shoulders at both ends. The shoulders are equipped with end boards, which, in their upper parts, have a pin leading inward. In the cut-out, a movable part is installed that has a shape of rectangle in the cross-section. At the ends of the movable part, there are attached flanges that have shape of a square in the cross-section, whereby these flanges fit into the shoulders of the fixed part. On the end board, the pin is located in the higher position than ending of the shoulder. When adjusting the wheel block, the movable part shall be lifted, where height of the stroke is limited by the pin in the end board. After this movement, the flange will get above the shoulder. Then, the movable part shall be rotated by 90 degrees, and the flange will once again plug into the cut-out. As the movable part has the shape of a rectangle in the cross-section, in one case the wheel block will be in tilted condition, and in the other case, the wheel block will be in ejected condition.

### Review of figures in the drawings

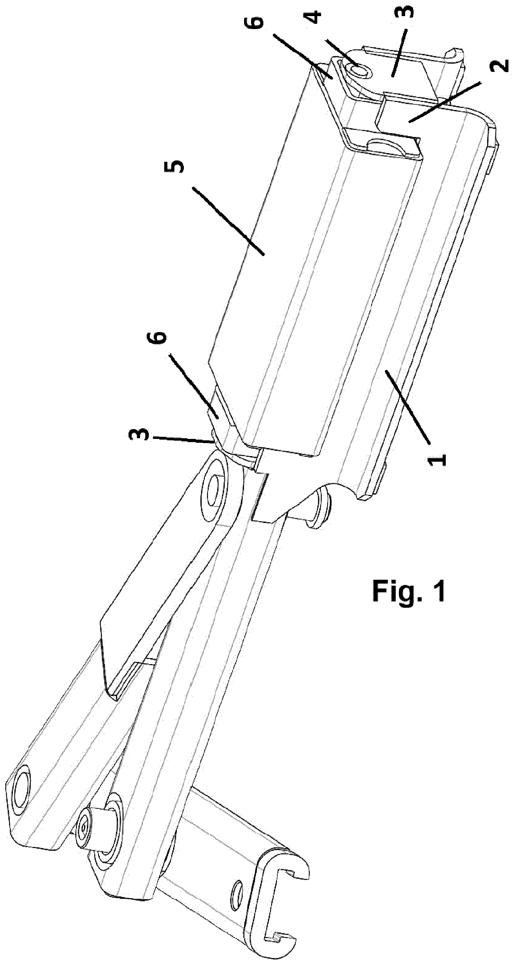

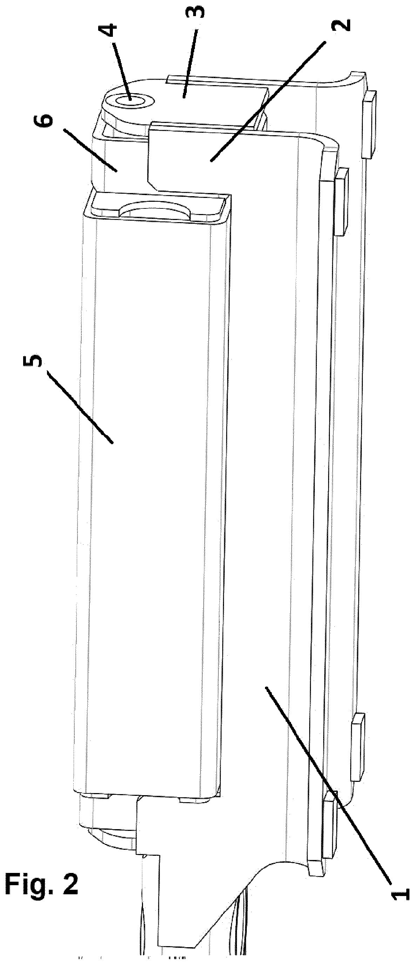

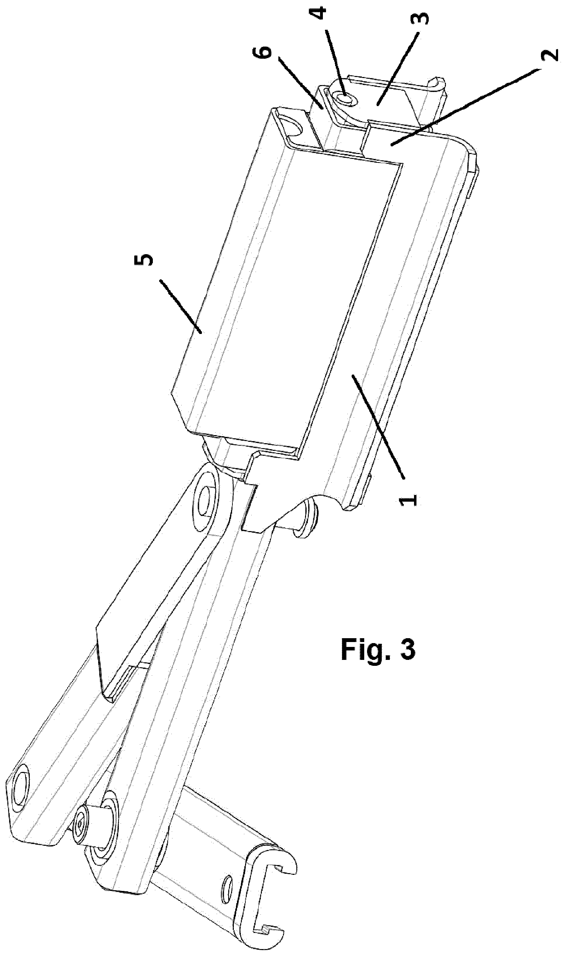

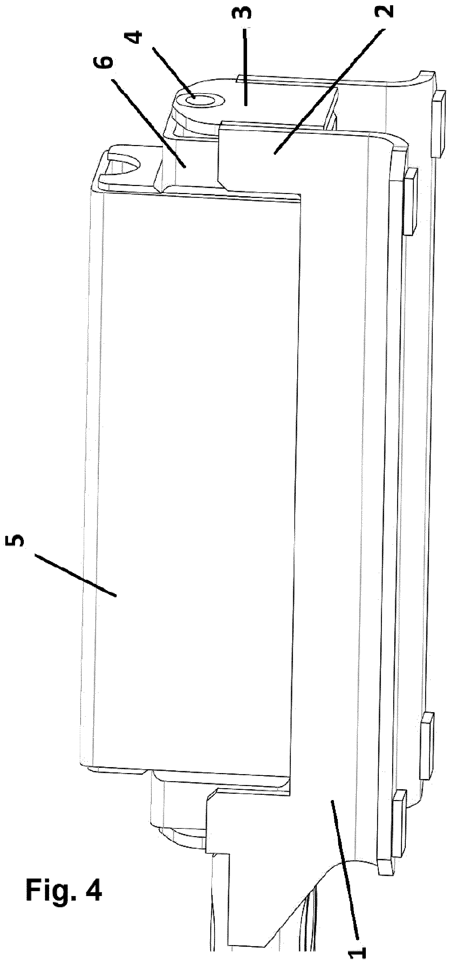

In the figures 1 and 2, the wheel block mechanism in tilted condition is displayed, and in the figures 3 and 4, the wheel block mechanism in ejected condition is displayed.

### Examples of technical solution embodiment

The mechanism contains a fixed part 1, where the central part of the fixed part 1 has a cut-out and also shoulders 2 at both ends. The shoulders 2 are equipped with end boards 3, which, in their upper parts, have a pin 4 leading inwards. In the cut-out, a movable part 5 is installed that has a shape of rectangle in the cross-section. At the ends of the movable part 5, there are attached flanges 6 that have shape of a square in the cross-section, whereby these flanges 6 fit into the shoulders 2 of the fixed part 1. On the end board 3, the pin 4 is located in the higher position than ending of the shoulder 2. When adjusting the wheel block, the movable part 5 shall be lifted, where height of the stroke is limited by the pin 4 in the end board 3. After this movement, the flange 6 will get above the shoulder 2. Then, the movable part 5 shall be rotated by 90 degrees, and the flange 6 will once again plug into the cut-out. As the movable part 5 has the shape of a rectangle in the cross-section, in one case, the wheel block will be in tilted condition, and in the other case, the wheel block will be in ejected condition.

## Claims

1. Mechanism for vertical adjustment of a wheel block mainly for railway wagons designed for transportation of cars, which contains a fixed part (1) and a moveable part (5), whereby the central part of the fixed part (1) has a cut-out for the movable part (5) and also shoulders (2) at both ends, the shoulders (2) being equipped with end boards (3), which, in their upper parts, have a pin (4) leading inwards, **characterised in that**
- the movable part (5) is installed in the cut-out and has the shape of a rectangle in the cross-section, whereby at the ends of the movable part (5), there are attached flanges (6) that have the shape of a square in the cross-section, whereby these flanges (6) fit into the shoulders (2) of the fixed part (1),
- on the end board (3), the pin (4) is located at a higher position than the endings of the shoulders (2), the moveable part being liftable, whereby the pin (4) is limiting the height of the stroke of the movable part (5) and the moveable part (5) can be rotated by 90° when the flange (6) is above the shoulder (2).

## Patentansprüche

1. Mechanismus für die vertikale Einstellung eines Räderblocks, hauptsächlich für die Eisenbahnwaggons, die für den Transport von Automobilen bestimmt sind, der einen stabilen Teil (1) und einen beweglichen Teil (5) umfasst, wobei der mittlere Teil des stabilen Teils (1) einen Ausschnitt für den beweglichen Teil (5) und auch die Arme (2) an den beiden Enden hat, wobei die Arme (2) mit den Endplatten (3) ausgestattet sind, die einen nach innen gerichteten Zapfen (4) im oberen Teil haben, **dadurch gekennzeichnet, dass**
- der bewegliche Teil (5) im Ausschnitt installiert ist und dessen Querschnitt die Form eines Rechtecks hat, wobei an den Enden des beweglichen Teils (5) die Flanschen (6) befestigt sind, deren Querschnitt die Form eines Vierecks hat, wobei diese Flanschen (6) in die Arme (2) des stabilen Teils (1) ineinandergreifen,
- der Zapfen (4) ist auf der Endplatte (3) in einer höheren Position angeordnet, als die Enden der Arme (2), wobei der bewegliche Teil hebbar ist, wobei der Zapfen (4) die Hubhöhe des beweglichen Teils (5) abgrenzt und der bewegliche Teil (5) um 90° umgedreht werden kann, falls der Flansch (6) oberhalb des Arms (2) ist.

## Revendications

1. Le mécanisme de réglage vertical d'un bloc de roue en particulier des wagons de chemin de fer destinés au transport de véhicules, comprenant une partie fixe (1) et une partie mobile (5), la partie médiane de la partie fixe (1) ayant une découpe -sortie pour la partie mobile (5) et également les bras (2) aux deux extrémités, les bras (2) étant pourvus de plaques d'extrémité (3) ayant un axe (4) dans la partie supérieure tourné vers l'intérieur **caractérisé en ce que ce**
- la partie mobile (5) est installée en découpe et a une section rectangulaire, aux extrémités de la partie mobile (5) sont fixées des brides (6) qui ont une section carrée, ces brides ( 6) emboîtement dans les bras (2) de la partie fixe (1),
- sur la plaque d'extrémité (3), l'axe (4) est placé en position plus haute que les extrémités des bras (2), la partie mobile étant relevable, l'axe (4) limitant la hauteur de levage de la partie mobile (5 ) et la partie mobile (5) pouvant tourner de 90° lorsque la bride (6) est au-dessus du bras (2).
